# DEMANDE DE BREVET EUROPEEN

(11) **EP 4 534 588 A1**
(43) Date de publication de la demande: **09.04.2025**
(21) Numéro de dépôt: 24203428.8
(22) Date de dépôt: 30.09.2024
(51) Int. Cl.: C08J 5/04, C08J 5/24, C08L 63/00, C08L 67/06, C08L 75/04, C08L 83/00, D04H 1/4266, D04H 1/4334, D04H 1/587, D06M 15/564, D06N 3/00, D06N 3/14

(54) **MATERIAU ISOLANT MINCE CONSTITUE DE FEUTRE ET D'UNE MATRICE POLYMERIQUE ET SES UTILISATIONS**

(30) Priorité: 02.10.2023 FR 2310487
(71) Demandeur: Creations Henry Jacques, 83920 La Motte (FR)
(72) Inventeur: DURIF, Bastien, 38300 BOURGOIN JALLIEU (FR); LOISEAU, Guillaume, 69290 POLLIONNAY (FR)
(74) Mandataire: Axe PI

(57) **Abrégé**

L'invention concerne une matière composite en couche mince. L'invention se caractérise en ce qu'elle comprend un feutre constitué de laine, coton, polyester, verre, acrylique et/ou de nylon, ledit feutre étant imprégné d'une matrice polymérique choisie parmi la famille des résines polyuréthanes, époxys, silicones, polyesters insaturés, prise seule ou en mélange. L'invention concerne également les utilisations d'une telle matière composite comme agent de revêtement pour ses propriétés antisalissures, antitaches, isolations thermique et phonique.

## Description

### DOMAINE TECHNIQUE

La présente invention concerne une nouvelle matière composite (ou matériau) en couche mince souple composée d'un feutre et d'une matrice polymérique, possédant d'excellentes propriétés de souplesse et de durabilité, ainsi que ses utilisations comme agent de revêtement pour ses propriétés notamment d'isolant thermique et phonique. L'invention concerne également un procédé de fabrication d'une telle matière composite.

### TECHNIQUE ANTERIEURE

On connaît déjà des matériaux d'isolation phonique, comme les matériaux non-tissés ou les feutres, ou encore l'utilisation d'une mousse sur un tissu d'habillage en verre textile.

De manière générale, le feutre est donc communément connu pour être utilisé comme isolant phonique. Il présente de bonnes propriétés d'absorption des ondes sonores, notamment grâce à sa structure poreuse.

Le feutre peut être défini comme un matériau non tissé composé de fibres, naturelles ou synthétiques, agglomérées ensemble.

Plus particulièrement, le feutre de laine naturelle, d'origine animale, est bien connu comme isolant phonique.

Par ailleurs, on connaît également l'utilisation de feutre en fibres de nylon (polyamide) comme isolant phonique, ainsi que d'autres feutres en fibres synthétiques composées de polyester, d'acrylique ou encore de polypropylène.

A titre d'exemple, on connaît d'après le document FR2635268 des balles de tennis en caoutchouc qui peuvent être recouvertes d'un revêtement de feutre fixé à l'aide d'un adhésif à la balle de caoutchouc, le feutre constitué de mèches mélangées de fibres de laine et de fibres de nylon étant produit par tricotage puis gratté rasé ou via cardage sur un substrat tissé ou tricoté.

On connaît le document FR2932499 qui divulgue un revêtement pour murs et/ou plafonds en forme de lés, comportant un tissu de revêtement et une couche d'isolation acoustique en non-tissé, feutre, mousse ou dans un autre élément en nappe isolant phonique ou insonorisant, sachant que le tissu de revêtement dépasse la couche d'isolation acoustique sur les deux bords latéraux et sachant que le tissu de revêtement et la couche d'isolation acoustique sont liés l'un à l'autre à l'exception des deux bords latéraux.

Toutefois, les feutres ainsi utilisés sont des matières sans encapsulation entraînant une dégradation de la matière isolante au cours du temps.

Par ailleurs, on connaît le document brevet EP1431448 qui exemplifie notamment un feutre à base de fibres de PET (polyéthylène téréphthalate) et de laine ou de coton imprégné par une résine de polyuréthane (PU) pouvant présenter une épaisseur de 0.7-1 mm.

Le document brevet JP2007162203 exemplifie également un matériau composite formé d'un feutre constitué de fibres PET colorées (le feutre comprenant un colorant) imprégné par une résine polyuréthane.

Le document brevet BE899775 décrit notamment la préparation d'un feutre à base de fibres de polyester, lequel est imprégné avec un prépolymère à base d'uréthane pour le transformer en un feutre comportant une résine d'uréthane en mousse entre les fibres et ayant un poids par unité de surface de 120g/m², une épaisseur de 4mm et une densité apparente de 0,30g/cm³.

On connaît également des articles commercialisés par la société PUREONO sous le nom de marque "SUBA"^{™}, en particulier SUBA IV^{™} lesquels se présentent sous forme de feutres à base de polyester imprégné par le polyuréthane. Ils semblent présenter un indice de dureté compris entre 44 et 55 Shore D ou entre 80 et 82 Asker C.

A cet effet, la publication Dasol Lee et al. (« Estimating the mechanical properties of polyurethane-impregnated felt pads », Journal of Mechanical Science and Technology 31 (12) (2017) 5705-5710) divulgue une étude qui estime les propriétés mécaniques des matériaux SUBA^{™} 400, SUBA^{™} 600 et SUBA^{™} 800, lesquels présentent une épaisseur de 1.30mm.

Enfin, on connaît le document brevet WO2011101343 qui divulgue un matériau composite particulièrement adapté comme agent de revêtement pour l'isolation thermique et phonique, utilisé entre autres comme revêtement de protection de structures aéronautiques ou comme emballage de protection, le matériau étant à base d'un feutre de fibres de basalte imprégné par une résine phénolique. Ce document aborde spécifiquement le problème de l'isolation thermique et phonique ; l'utilisation de fibres naturelles choisies parmi le basalte, le lin, le chanvre, le tournesol, le bambou ou le maïs (préférentiellement le basalte) sous forme d'un feutre permet avantageusement une expansion volumique des fibres pouvant ainsi se répartir de manière uniforme dans l'épaisseur du substrat, à savoir des résines à base aqueuse telles que les résines de type phénolique et notamment les résines phénol-formaldéhyde, assurant ainsi une homogénéité du produit final. Cette expansion volumique contribue en outre à la résistance mécanique ainsi qu'aux performances acoustiques, phoniques et thermiques du matériau composite formé. Ces résines sont, avantageusement, particulièrement performantes pour assurer au matériau composite final une excellente résistance à la chaleur. Alternativement, les résines utilisées peuvent être des résines naturelles à base aqueuse issues de la biosource, telles que les résines de bois ou les résines phénoliques d'origines végétales (tanins du raisin). Le matériau composite requiert également la mise en oeuvre d'un agent d'expansion. L'agent d'expansion peut être choisi parmi les expanseurs habituellement utilisés pour ce type d'utilisation, à savoir préférentiellement constitués de microsphères de type Expancel^{®} commercialisées par la société AKZO NOBELO, peuvent également être du type Isobutane ou bien encore être choisis parmi des levures naturelles ou chimiques.

### PROBLEME TECHNIQUE

Considérant ce qui précède, un problème que se propose de résoudre l'invention est de créer un matériau destiné notamment à l'isolation phonique dans un milieu pouvant entraîner une dégradation de type poussières ou taches, présentant à la fois une importante souplesse et une grande durabilité, sans pour autant altérer ses propriétés isolantes.

### SOLUTION TECHNIQUE

L'invention a donc pour premier objet une matière composite en couche mince d'une épaisseur comprise entre 0,1 mm et 5 mm caractérisée en ce qu'elle comprend un feutre constitué de filés mélangés de laine et de nylon et contient de 60 à 80% en poids de fibres de laine et de 20 à 40% en poids de fibres de nylon, ledit feutre étant imprégné d'une matrice polymérique entre 0.1 g et 0.4 g par centimètre carré de feutre, ladite matrice polymérique étant une résine polyuréthane.

De plus, l'invention a pour objet l'utilisation de la matière composite selon l'invention comme agent de revêtement pour ses propriétés antisalissures, antitaches, isolations thermique et phonique.

### AVANTAGES APPORTES

La matière composite selon l'invention est constituée d'un feutre isolant encapsulé dans une matrice polymérique non poreuse.

La matière composite étant sensiblement non poreuse, le feutre est ainsi protégé des salissures et/ou des poussières pouvant dégrader ses propriétés, notamment isolantes, lui conférant une bonne durabilité.

De plus, la résine utilisée comme matrice polymérique permet d'améliorer la cohésion de la matière pour faciliter sa mise en oeuvre et améliorer la précision des découpes, dans le cas de pièces de décors notamment.

Dans une optique esthétique et/ou décorative, la matrice polymérique peut avantageusement comprendre un ou plusieurs pigments et/ou colorants pour teinter la matière.

La matrice polymérique peut également avantageusement comprendre d'autre(s) additif(s) tel(s) que des composés anti-feu ou anti-UV.

La matière composite se présente en couche mince d'une épaisseur comprise entre 0,1 mm et 5 mm, préférentiellement comprise entre 0,2 mm et 3 mm, et plus préférentiellement comprise entre 0,3 mm et 2 mm, ce qui lui confère une bonne souplesse, de par la plasticité et la flexibilité de la matrice polymérique, notamment résine polyuréthane, ainsi utilisée.

La matière composite s'adapte ainsi à différentes utilisations comme agent de revêtement, aussi bien aux revêtements des murs et plafonds qu'aux pièces de décor et aux emballages.

### BREVE DESCRIPTION DES DESSINS

Dans cette description, à moins qu'il ne soit spécifié autrement, il est entendu que, lorsqu'un intervalle est donné, il inclut les bornes supérieure et inférieure dudit intervalle.

L'invention et les avantages qui en découlent seront mieux compris à la lecture de la description et des modes de réalisation non limitatifs qui suivent, au regard des dessins annexés dans lesquels :
La Figure 1 représente un morceau de feutre brut non imprégné de matrice polymérique (Figure 1a) et un morceau de matière composite selon l'invention (Figure 1b) après exposition à une cuillère à café de vin rouge puis nettoyage.
La Figure 2 représente un morceau de feutre brut non imprégné de matrice polymérique (Figure 2a) et un morceau de matière composite selon l'invention (Figure 2b) après exposition à une cuillère à café d'huile de tournesol puis nettoyage.
La Figure 3 représente un morceau de feutre brut non imprégné de matrice polymérique (Figure 3a) et un morceau de matière composite selon l'invention (Figure 3b) après exposition à une cuillère à café de sauce ketchup puis nettoyage.
La Figure 4 représente un morceau de feutre brut non imprégné de matrice polymérique (Figure 4a) et un morceau de matière composite selon l'invention (Figure 4b) après exposition à une cuillère à café de sciure de bois puis nettoyage.

### DESCRIPTION DES MODES DE REALISATION

L'invention concerne une matière composite en couche mince caractérisée en ce qu'elle comprend un feutre constitué de filés mélangés de laine et de nylon et contient de 60 à 80% en poids de fibres de laine et de 20 à 40% en poids de fibres de nylon, ledit feutre étant imprégné d'une matrice polymérique entre 0.1 g et 0.4 g par centimètre carré de feutre, ladite matrice polymérique étant une résine polyuréthane.

Par matière composite en couche mince selon l'invention on entend une matière de faible épaisseur qui se présente en couche mince d'une épaisseur comprise entre 0,1 mm et 5 mm, plus préférentiellement comprise entre 0,2 mm et 3 mm, et encore plus préférentiellement comprise entre 0,3 mm et 2 mm.

Un feutre peut être constitué de laine, coton, polyester, verre, acrylique et/ou de nylon, c'est-à-dire de filés ou multifilaments de laine, coton, polyester, verre, acrylique et de nylon, pris seul ou en mélange, qui peuvent être non tissés, tricotés, grattés, ou rasés.

On peut utiliser un feutre tricoté traité par une opération de foulage est constitué de filés à 100% polyester, de filés mélangés en polyester et coton, de multifilaments en polyester ou nylon, de multifilaments texturés en polyester ou nylon, ou de multifilaments en polyester et nylon et de multifilaments texturés en polyester et nylon.

La matière composite selon l'invention comprendun feutre constitué de filés mélangés, préférentiellement non tissés, de laine et de nylon et contient de 60 à 80% en poids de fibres de laine et de 20 à 40% en poids de fibres de nylon ou, plus préférentiellement, 65% en poids de fibres de laine et 35% en poids de fibres de nylon.

La matière composite selon l'invention comprend ledit feutre imprégné d'une matrice polymérique, ladite matrice polymérique étant une résine polyuréthane.

Il existe d'autre(s) matrice(s) polymérique(s) choisie parmi la famille des résines époxys, silicones, polyesters insaturés, prise seule ou en mélange.

La matrice polymérique a pour rôle d'assurer la cohésion et la stabilité géométrique du feutre.

Selon un mode de réalisation préféré, la matrice polymérique comprend un ou plusieurs additifs tels que des pigments, colorants, composés anti-feu ou encore composés anti-UV, pris seul ou en mélange.

Selon un mode de réalisation, la matrice polymérique comprend un ou plusieurs pigments et/ou colorants pour teinter la matière composite.

Selon un autre mode de réalisation, la matrice polymérique comprend un composé anti-feu et/ou un composé anti-UV.

La matrice polymérique est ainsi souple et possède préférentiellement un indice de dureté compris entre 10 Shore A et 90 Shore D, plus préférentiellement compris entre 40 Shore A et 85 Shore D, et encore plus préférentiellement compris entre 60 Shore A et 80 Shore D.

La matière composite comprend entre 0.1 g et 0.4 g de matrice polymérique, préférentiellement 0,35 g, par centimètre carré de feutre.

L'intégration de la matrice polymérique dans le réseau fibreux se fait avantageusement par une méthode combinant coulée et infusion pour obtenir un matériau poreux uniquement à coeur, permettant de conserver une bonne capacité d'isolation phonique issue du feutre, malgré la finesse de la matière composite. Cette finesse permet également de conserver une souplesse de la matière composite pour sa mise en oeuvre dans différentes applications.

Selon un mode de réalisation préféré, et de manière particulièrement avantageuse, la matière composite est sensiblement non poreuse avec un taux de porosité compris entre 0 et 15%, préférentiellement entre 0 et 5% et encore plus préférentiellement entre 0 et 1%.

Un autre objet de l'invention concerne un procédé de préparation d'une matière composite selon l'invention.

Ce procédé comprend les étapes de :
- découpe dudit feutre aux dimensions souhaitées et séchage en étuve pendant 10 min à 2h à une température comprise entre 50°C et 100°C (plus la température étant élevée plus le temps étant réduit sans toutefois dégrader les propriétés des composants de la matière selon l'invention), par exemple 45min à 75°C, pour retirer toute trace d'humidité ;
- en parallèle, préparation d'une plaque métallique pour la réalisation d'une mise sous-vide de type infusion, autrement appelée bagging, en définissant une région pseudo-carrée à l'aide d'un mastic d'infusion, ladite région étant divisée en deux zones servant respectivement à une coulée de ladite matrice polymérique et à la mise sous vide du système, la zone dédiée à la coulée devant être avantageusement légèrement plus grande que le morceau de feutre à infuser, par exemple 2-3 cm tout autour de celui-ci, le morceau de feutre ne devant pas dépasser de la zone une fois positionné, la séparation entre les deux zones étant réalisée physiquement à l'aide d'un obstacle imperméable, tel qu'une bande de mastic d'infusion, et un agent démoulant est ensuite appliqué sur chacune de ces zones ;
- préparation de la matrice polymérique, comprenant optionnellement au moins un pigment ou colorant, suivant un ratio compris entre 0.3g et 0.4g de matrice polymérique, préférentiellement 0.35g, par centimètre carré de feutre ;
- versement, préférentiellement de manière homogène, de la matrice polymérique ainsi préparée dans la zone prévue pour la coulée et dégazage en étuve sous-vide, le dégazage permettant de retirer les bulles générées lors de l'étape de mélange des différents composants ;
- placement du feutre découpé et séché sur la matrice dégazée puis d'un tissu d'arrachage (peel-ply) de dimensions légèrement plus grandes, par exemple environ 2-3 cm, que le feutre ;
- placement d'un feutre à faible densité tel qu'un géotextile polyester dans le second espace de la plaque dédié à la mise sous vide, de manière à recouvrir l'intégralité de l'espace, ceci permettant d'homogénéiser la prise de vide sur l'ensemble de l'espace ;
- placement d'un pli de tissu de verre, préférentiellement d'une densité d'environ 350g/m², au niveau de l'obstacle marquant la séparation entre les deux zones précédemment délimitées sur la plaque, ceci permettant le passage de l'air et de la matrice polymérique, préférentiellement une résine polyuréthane, d'une zone à l'autre au moment de l'infusion ;
- puis placement d'une bouche d'aspiration, reliée à une pompe à vide, dans la zone dédiée à la mise sous vide avec mise en place d'une bâche à vide recouvrant les deux zones (coulée et mise sous vide), en s'assurant au moment de la prise de vide, qu'aucun plissement de la bâche à vide n'est présent, ce qui pourrait entraîner des fuites et des défauts sur la plaque finale ;
- placement d'un morceau de feutre au-dessus de la bâche à vide sur l'ensemble de la bâche à vide pour protéger le montage et éviter tout risque de performation de la bâche par un corps étranger pouvant entraîner une perte du niveau de vide ; et
- disposition du montage sous une presse pour obtenir la matière composite après démoulage.

Par exemple, on place le montage sous une presse de 50T et on dispose une plaque métallique sur le morceau de feutre imprégné, permettant de répartir la pression de manière homogène. A l'aide de la presse, un chargement de 2kg par centimètre carré de feutre imprégné est préférentiellement appliqué.

Le montage est ainsi maintenu sous presse pendant 6h avant démoulage.

Un autre objet de l'invention concerne l'utilisation d'une matière composite selon l'invention comme agent de revêtement pour ses propriétés antisalissures, antitaches, isolations thermique et phonique.

Préférentiellement, la matière composite est avantageusement utilisée pour revêtir des murs et plafonds sous forme de lès, pour former des pièces de décor, pour constituer des emballages ou orner et protéger un objet.

### EXEMPLES

A titre d'exemple illustratif, il est mentionné ci-après des exemples de procédé de préparation d'une matière composite selon l'invention ainsi que de la mise en oeuvre de ses propriétés avantageuses en termes d'isolation phonique, isolation thermique, imperméabilité et antisalissures.

### EXEMPLE 1 : Procédé de préparation d'une matière composite selon l'invention

A titre d'exemple illustratif, un exemple de procédé de préparation d'une matière composite selon l'invention est plus particulièrement décrit ci-après. Il comprend les étapes suivantes selon lesquelles :
- on découpe un morceau de feutre (constitué de filés mélangés de laine et de nylon et contenant 60 à 80% en poids de fibres de laine et 20 à 40% en poids de fibres de nylon (P45^{®} de PLAYNE'S (WSP TEXTILES))) aux dimensions souhaitées ;
- ledit feutre est séché en étuve pendant 45 minutes à une température de 75°C ;
- on prépare une plaque métallique en définissant une région pseudo-carrée à l'aide d'un mastic d'infusion ;
- ladite région est divisée en deux zones servant respectivement à une coulée de la matrice polymérique et à la mise sous vide du système, la zone dédiée à la coulée étant légèrement plus grande que le morceau de feutre à infuser de 2-3 cm tout autour de celui-ci, le morceau de feutre ne dépassant pas de la zone une fois positionné ;
- la séparation entre les deux zones est réalisée physiquement à l'aide d'une bande de mastic d'infusion ;
- un agent démoulant est ensuite appliqué sur chacune de ces zones ;
- on verse de manière homogène la matrice polymérique (à savoir 0,35 g de résine polyuréthane par centimètre carré de feutre) dans la zone prévue pour la coulée ;
- on dégaze en étuve sous-vide ;
- on place du feutre découpé et séché sur la matrice dégazée, puis un tissu d'arrachage (peel-ply) de dimensions plus grandes que le feutre de 2-3 cm ;
- on place un géotextile polyester dans le second espace de la plaque dédié à la mise sous vide, de manière à recouvrir l'intégralité de l'espace ;
- on place un pli de tissu de verre d'une densité de 350g/m² au niveau de l'obstacle marquant la séparation entre les deux zones précédemment délimitées sur la plaque ;
- on place une bouche d'aspiration, reliée à une pompe à vide, dans la zone dédiée à la mise sous vide avec mise en place d'une bâche à vide recouvrant les deux zones (coulée et mise sous vide) ;
- on place un morceau de feutre au-dessus de la bâche à vide sur l'ensemble de la bâche à vide ;
- on dispose le montage sous une presse de 50T ;
- on dispose une plaque métallique sur le morceau de feutre imprégné ;
- à l'aide de la presse, un chargement de 2kg par centimètre carré de feutre imprégné est appliqué ;
- le montage est ainsi maintenu sous presse pendant 6h avant démoulage ; et
- on récupère la matière composite selon l'invention sous forme d'une couche mince d'une épaisseur comprise entre 0,1mm et 5mm, i.e. 2.8mm.

### EXEMPLE 2 : Test d'isolation phonique d'une matière composite selon l'invention

L'objectif est d'évaluer la capacité de la matière composite selon l'invention à assurer une capacité d'isolation phonique.

Les résultats obtenus sont comparés à ceux obtenus avec un feutre brut pour démontrer de l'intérêt d'utiliser ladite matière composite selon l'invention pour des applications d'isolation phonique.

Par feutre brut, on entend le même feutre que celui mis en oeuvre dans la matière composite selon l'invention mais non imprégné par la matrice polymérique, i.e. résine polyuréthane.

La matière composite mise en oeuvre dans cet exemple est obtenue par le procédé de l'exemple 1.

Pour cet essai, un espace confiné tubulaire de diamètre extérieur 100mm, d'épaisseur 2mm et de longueur 1920mm est utilisé. Il est constitué de deux tuyaux PVC emboités de longueur 1000mm.

A la jonction entre les deux tuyaux, il est possible de placer un disque isolant qui est maintenu par coincement.

Au total, trois configurations de disque isolant sont étudiées :
- Aucun corps isolant.
- Un disque de feutre brut de 100mm de diamètre et d'une épaisseur d'environ 2,8mm.
- Un disque de matière composite selon l'invention de 100mm de diamètre et d'une épaisseur d'environ 2.8mm.

On délimite ainsi deux zones dans le montage : une zone d'entrée et une zone de sortie.

Au niveau de la zone d'entrée, une enceinte portative est disposée. Cette enceinte joue le rôle d'émetteur.

Au niveau de la zone de sortie, un récepteur disposant d'une application de mesure du bruit est placé.

Le montage expérimental est placé en extérieur, dans un endroit calme, où le bruit moyen a été mesuré à 54dB.

Afin de garantir un bruit homogène entre les différents essais, le son émis par l'enceinte correspond à un « La - 440Hz ».

Le récepteur servant à la mesure du bruit est inséré dans la zone de sortie du montage et l'évolution du bruit est enregistré pendant une durée de 1min30.

Pour analyser les résultats de ces tests, une comparaison sur la valeur moyenne en dB sur la période d'enregistrement est faite pour chaque configuration.

La mesure a été faite avec l'enceinte éteinte pour mesurer le bruit ambiant.

Pour chacun des essais, la valeur moyenne du bruit en dB est relevée et les résultats sont présentés dans le tableau 1.

**Tableau 1 : Résultats en fonction de l'isolant utilisé**

| **Bruit ambiant** | **Test sans isolant** | **Test avec feutre brut** | **Test avec matière composite selon l'invention** |
|---|---|---|---|
| 54 db | 116.7 db | 115.5 db | 103.7 db |

D'après les résultats ainsi obtenus, on observe une atténuation du bruit lorsque l'un des deux isolants étudiés est placé au sein du montage.

Dans le cas du feutre brut, cette atténuation de valeur moyenne du bruit est toutefois négligeable et seulement de l'ordre de 1%.

Elle monte à 11% avec la matière composite selon l'invention.

Ainsi, si la capacité du feutre brut à remplir une fonction d'isolation phonique reste très limitée, l'utilisation de la matière composite selon l'invention permet une atténuation significative du bruit de plus de 11% et peut donc être avantageusement utilisée pour des applications d'isolation phonique.

### EXEMPLE 3 : Test d'isolation thermique d'une matière composite selon l'invention

L'objectif est d'évaluer la capacité de la matière composite selon l'invention à assurer une capacité d'isolation thermique.

Les résultats obtenus sont comparés à ceux obtenus sur un feutre brut et en l'absence de corps isolant pour montrer l'intérêt de l'utilisation de ce composite pour des applications d'isolation.

Par feutre brut, on entend le même feutre que celui mis en oeuvre dans la matière composite selon l'invention mais non imprégné par la matrice polymérique, i.e. résine polyuréthane.

La matière composite mise en oeuvre dans cet exemple est obtenue par le procédé de l'exemple 1.

Pour cet essai, un espace confiné tubulaire de diamètre extérieur 100mm, d'épaisseur 2mm et de longueur 1920mm est utilisé. Il est constitué de deux tuyaux PVC emboités de longueur 1000mm.

A la jonction entre les deux tuyaux il est possible de placer un disque isolant qui est maintenu par coincement.

Au total, trois configurations de disque isolant sont étudiées :
- Aucun corps isolant.
- Un disque de feutre brut de 100mm de diamètre et d'une épaisseur d'environ 2.8mm.
- Un disque de matériau composite selon l'invention de 100mm de diamètre et d'une épaisseur d'environ 2,8mm.

Une source de chaleur (soufflerie d'air chaud) est placée à l'une des extrémités du dispositif.

Une thermosonde est placée à l'autre extrémité.

La pièce dans laquelle l'essai est réalisé est régulée en température à 21°C.

Le tube de PVC est isolé de la table qui lui sert de support à l'aide d'un tapis du type moquette.

Entre chaque essai, le tube de PVC servant d'enceinte confinée est refroidi jusqu'à une température de 21°C.

Au début de l'essai, la soufflerie est placée à distance du montage expérimental. Elle est mise en chauffe jusqu'à atteindre une température d'air de 75°C. Cette mise à distance est réalisée pour conserver une température dans le montage expérimental de 21°C.

Une fois sa température de consigne atteinte, la soufflerie est déplacée pour orienter le flux dans le tube PVC.

A l'extrémité opposée du montage, la thermosonde est maintenue manuellement au centre de la section du tube et à environ 5cm dans ce dernier.

La température mesurée par la thermosonde placée à l'autre extrémité du tube est alors relevée à t = 0 s, t = 60 s et t = 120 s.

t = 0 s correspond au moment où la sortie d'air de la soufflerie est orientée dans le tube au niveau de l'extrémité opposée à celle de la thermosonde.

Pour chacun des cas d'études, les températures à t = 0s, t = 60s et t = 120s ont été relevées et les résultats sont présentés dans le tableau 2.

**Tableau 2 : Résultats en fonction du temps et de l'isolant**

| | **t = 0 s** | **t = 60s** | **t = 120** s |
|---|---|---|---|
| **Sans isolant** | 21°C | 48°C | 50°C |
| **Avec isolant de feutre brut** | 21°C | 25°C | 28°C |
| **Avec isolant en matière composite selon l'invention** | 21°C | 23°C | 24°C |

Les résultats ainsi obtenus mettent en évidence la capacité du feutre brut et de la matière composite selon l'invention à assurer une fonction d'isolation thermique.

On notera que ; dans le cadre de cet exemple, la matière composite selon l'invention offre de meilleurs résultats que le feutre brut et apparaît donc être un meilleur isolant thermique que le feutre brut.

### EXEMPLE 4 : Essais d'imprégnation à l'eau d'une matière composite selon l'invention

L'objectif est d'évaluer la capacité de la matière composite selon l'invention à résister à des projections d'eau.

L'essai d'absorption d'eau consiste à immerger totalement nos échantillons de matière (feutre brut et matière composite selon l'invention).

Par feutre brut, on entend le même feutre que celui mis en oeuvre dans la matière composite selon l'invention mais non imprégné par la matrice polymérique, i.e. résine polyuréthane.

La matière composite mise en oeuvre dans cet exemple est obtenue par le procédé de l'exemple 1.

Une comparaison de la masse des échantillons avant et après immersion permet de déterminer la masse d'eau emprisonnée dans la matière et donc de quantifier sa capacité à absorber l'eau de son milieu environnant.

Pour chaque matière (feutre brut et matière composite selon l'invention), un échantillon de matière est prélevé.

Ces échantillons sont pesés.

Ils sont ensuite immergés pendant 60 secondes dans un récipient d'eau et maintenus au fond à l'aide d'une masse.

Ils sont pesés de nouveau une fois sortis du récipient d'eau.

Les masses avant et après immersion sont comparées pour déterminer le pourcentage massique d'eau absorbé par la matière testée et les résultats sont présentés dans le tableau 3.

**Tableau 3 : Masses des matériaux avant et après immersion dans l'eau,**

| | **Feutre brut** | **Matière composite selon l'invention** |
|---|---|---|
| **Masse avant immersion (g)** | 1.77 | 4.98 |
| **Masse après immersion (g)** | 5.95 | 5.13 |
| **Masse d'eau imprégnée (g)** | 4.18 | 0.15 |
| **Pourcentage massique d'eau par rapport au poids initial (%)** | 236.2 | 3 |

On observe que la matière composite selon l'invention n'absorbe qu'une faible quantité d'eau (3% de la masse initiale de l'échantillon) contrairement au feutre brut qui se comporte comme une éponge et absorbe 2.36 fois sa masse initiale en eau.

Le feutre brut présente une importante capacité à capter l'eau dans son milieu environnant.

Au contraire, la matière composite selon l'invention présente une affinité à l'eau bien plus faible (sa capacité d'absorption est faible) que le feutre brut et est donc relativement imperméable.

### EXEMPLE 5 : Essais de résistance à la tache (antisalissures) d'une matière composite selon l'invention

L'objectif est d'évaluer la capacité de la matière composite selon l'invention à résister à différents types de taches.

Un total de 4 essais a été mené :
- Résistance à une tache de liquide : vin rouge.
- Résistance à une tache de gras : huile de tournesol.
- Résistance à une tache de nourriture : sauce ketchup.
- Résistance à une tache de poussière : sciure de bois.

Les essais de résistance à la tache consistent à appliquer un agent tachant sur les différents échantillons (feutre brut et matière composite selon l'invention) pendant un certain temps.

Par feutre brut, on entend le même feutre que celui mis en oeuvre dans la matière composite selon l'invention mais non imprégné par la matrice polymérique, i.e. résine polyuréthane.

La matière composite mise en oeuvre dans cet exemple est obtenue par le procédé de l'exemple 1.

Il s'en suit une phase de nettoyage à sec avec un papier absorbant.

Il est complexe de quantifier la capacité des échantillons ainsi testés à être tachés. Toutefois, une comparaison visuelle entre l'état initial de la matière et son état après application du produit tâchant peut être faite de manière qualitative.

Une étude comparative entre les états initiaux et finaux est donc réalisée de manière qualitative.

Pour chaque matière (feutre brut et matière composite selon l'invention), un échantillon de matière est prélevé.

Sur chacun de ces échantillons, une cuillère à café d'agent tachant (respectivement et de manière indépendante vin rouge, huile de tournesol, sauce ketchup ou sciure de bois) est versée.

L'agent tachant à tester est laissé au repos sur la matière pendant 5min.

Après ce délai, un nettoyage à sec est réalisé. Ce dernier consiste à essuyer l'échantillon grâce à un papier absorbant propre.

Ensuite, une comparaison visuelle de l'état avant/après est réalisée.

### A. Essai tache de liquide : vin rouge

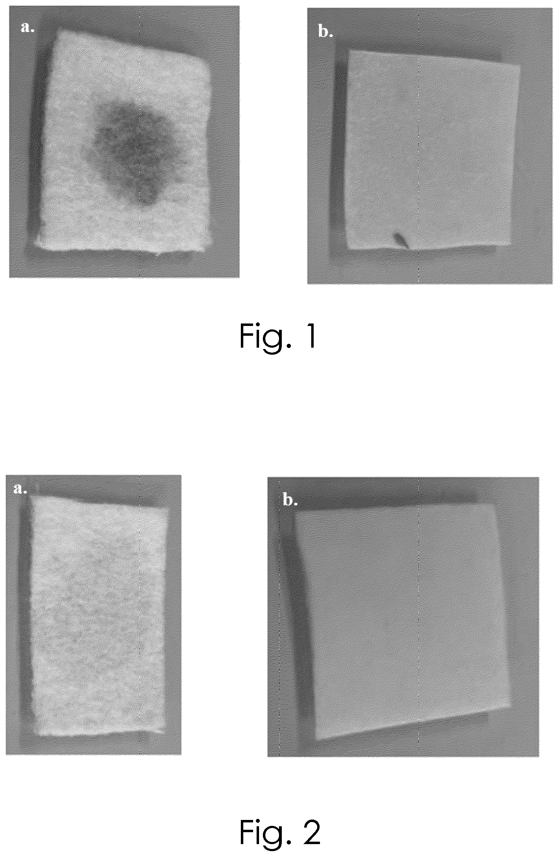

La photo des échantillons de feutre brut et de matière composite selon l'invention après exposition au vin rouge puis nettoyage est illustrée respectivement en Figure 1a et 1b.

On peut clairement distinguer une dégradation de l'aspect esthétique du feutre brut d'un point de vue de la couleur. En particulier, un brunissement du feutre est observé à l'endroit de l'application du vin rouge (Figure 1a).

Au contraire, aucune dégradation n'est visible à l'œil nu sur le matériau composite selon l'invention après ce nettoyage à sec (Figure 1b). A titre informatif, la marque observée sur la plaque est initialement présente sur l'échantillon testé.

### B. Essai tache de gras : huile de tournesol

La photo des échantillons de feutre brut et de matière composite selon l'invention après exposition à l'huile de tournesol et nettoyage est illustrée respectivement en Figure 2a et 2b.

On peut clairement distinguer une dégradation de l'aspect esthétique du feutre brut qui peut être décrit par un ternissement de la couleur.

De plus, l'huile ayant imbibé le feutre, une pellicule grasse reste sur les doigts lors de la manipulation de l'échantillon.

Au contraire, aucune dégradation n'est visible à l'œil nu sur la matière composite selon l'invention après ce nettoyage à sec ni aucun film graisseux en résulte.

### C. Essai tache de nourriture : sauce ketchup

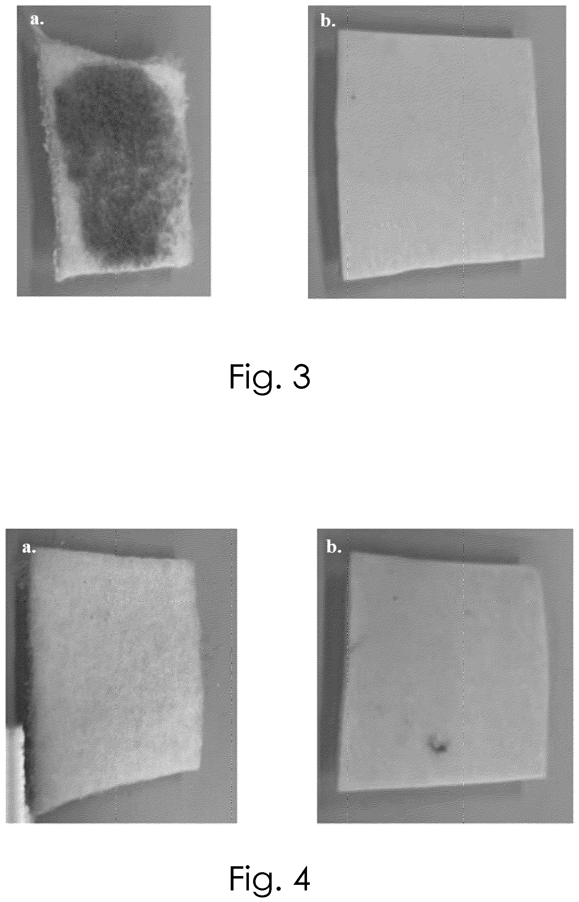

La photo des échantillons de feutre brut et de matière composite selon l'invention après exposition à la sauce ketchup et nettoyage est illustrée respectivement en Figure 3a et 3b.

On peut clairement distinguer une dégradation de l'aspect esthétique du feutre brut d'un point de vue de la couleur.

Une tâche rougeâtre, caractéristique des produits à base de tomate demeure à l'endroit de l'application de la sauce ketchup (imaginable d'après la Figure 3a en noir et blanc).

Au contraire, aucune dégradation n'est visible à l'œil nu sur la matière composite selon l'invention après ce nettoyage à sec (Figure 3b).

### D. Essai tache de poussière : sciure de bois

La photo des échantillons de feutre brut et de matière composite selon l'invention après exposition à la sciure de bois et nettoyage est illustrée respectivement en Figure 4a et 4b.

Une légère contamination du feutre brut est observée. Localement, de petites particules de bois demeurent emprisonnées dans les fibres du feutre.

Au contraire, aucune dégradation n'est visible à l'œil nu sur le matériau composite selon l'invention après ce nettoyage à sec. A titre informatif, la marque observée sur la plaque est initialement présente sur l'échantillon testé.

D'après les résultats ainsi obtenus et illustrés par les Figures 1-4, ces essais (A-D) ont donc mis en évidence la faible résistance aux taches du feutre brut. En effet, la mise en contact avec du vin rouge, huile de tournesol et sauce ketchup conduit à une modification des propriétés au moins esthétiques du feutre brut par changement de couleur notamment et contribue à sa dégradation. Dans le cas d'une exposition aux poussières telles que de la sciure de bois, des particules peuvent localement être emprisonnées dans le réseau fibreux modifiant également l'esthétique de la pièce et contribue à sa dégradation.

Au contraire, de manière particulièrement avantageuse, la matière composite selon l'invention présente quant à elle une meilleure résistance aux taches en ce qu'elle demeure intacte lors des quatre essais réalisés malgré les traitements (dégradations) reçus.

## Revendications

1. Matière composite en couche mince d'une épaisseur comprise entre 0,1 mm et 5 mm **caractérisée en ce qu'**elle comprend un feutre constitué de filés mélangés de laine et de nylon et contient de 60 à 80% en poids de fibres de laine et de 20 à 40% en poids de fibres de nylon, ledit feutre étant imprégné d'une matrice polymérique entre 0.1 g et 0.4 g par centimètre carré de feutre, ladite matrice polymérique étant une résine polyuréthane.

2. Matière composite selon la revendication 1, **caractérisée en ce que** la matrice polymérique est souple et possède un indice de dureté compris entre 10 Shore A et 90 Shore D, préférentiellement compris entre 40 Shore A et 85 Shore D, et plus préférentiellement compris entre 60 Shore A et 80 Shore D.

3. Matière composite selon l'une des revendications précédentes, **caractérisée en ce qu'**elle se présente en couche mince d'une épaisseur comprise entre 0,2 mm et 3 mm, préférentiellement comprise entre 0,3 mm et 2 mm.

4. Matière composite selon l'une des revendications précédentes, **caractérisée en ce que** le feutre est constitué de filés mélangés de laine et de nylon et contient 65% en poids de fibres de laine et 35% en poids de fibres de nylon.

5. Matière composite selon l'une des revendications précédentes, **caractérisée en ce qu'**elle comprend 0,35 g de matrice polymérique par centimètre carré de feutre.

6. Matière composite selon l'une des revendications précédentes, **caractérisée en ce qu'**elle est sensiblement non poreuse avec un taux de porosité compris entre 0 et 15%, préférentiellement entre 0 et 5% et encore plus préférentiellement entre 0 et 1%.

7. Matière composite selon l'une des revendications précédentes, **caractérisée en ce que** la matrice polymérique comprend un ou plusieurs additifs tels que des pigments, colorants, composés anti-feu ou encore composés anti-UV, pris seul ou en mélange.

8. Utilisation d'une matière composite selon l'une des revendications 1 à 7 comme agent de revêtement pour ses propriétés antisalissures, antitaches, isolations thermique et phonique.

9. Utilisation selon la revendication 8 pour revêtir des murs et plafonds sous forme de lès, pour former des pièces de décor, pour constituer des emballages ou orner et protéger un objet.
